(19) Europäisches Patentamt

European Patent Office

Office européen des brevets

(11) **EP 3 936 804 B1**

(12) **EUROPEAN PATENT SPECIFICATION**

(45) Date of publication and mention
of the grant of the patent:
**04.12.2024  Bulletin 2024/49**

(21) Application number: **21184458.4**

(22) Date of filing: **08.07.2021**

(51) International Patent Classification (IPC):
**F25D 29/00** *(2006.01)*      *G01K 7/42* *(2006.01)*

(52) Cooperative Patent Classification (CPC):
**F25D 29/00; G01K 7/427;** F25D 2700/12;
F25D 2700/16

(54) **FOOD SAFETY SYSTEM FOR FOOD ITEMS IN COOLED ENVIRONMENTS**

LEBENSMITTELSICHERHEITSSYSTEM FÜR LEBENSMITTEL IN GEKÜHLTEN UMGEBUNGEN

SYSTÈME DE SÉCURITÉ ALIMENTAIRE POUR PRODUITS ALIMENTAIRES DANS DES
ENVIRONNEMENTS REFROIDIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.07.2020  EP 20185317**

(43) Date of publication of application:
**12.01.2022  Bulletin 2022/02**

(73) Proprietors:
• **Genossenschaft Migros Zürich
8005 Zürich (CH)**
• **Axino Solutions AG
4500 Solothurn (CH)**

(72) Inventors:
• **HIRSCH, Sven
8820 Wädenswil (CH)**
• **SCHÜLE, Martin
8820 Wädenswil (CH)**
• **ULZEGA, Simone
8820 Wädenswil (CH)**
• **HOURANI, Ihab
3074 Muri b. Bern (CH)**

(74) Representative: **Liebetanz, Michael
Isler & Pedrazzini AG
Giesshübelstrasse 45
Postfach 1772
8027 Zürich (CH)**

(56) References cited:
NL-C2- 1 036 411      US-A1- 2010 128 755
US-A1- 2017 224 161      US-A1- 2018 003 572
US-B1- 6 299 920

**Description**

TECHNICAL FIELD

The present invention relates to a food safety system for food items in cooled environments. More specifically, the invention relates to a non-invasive temperature method for measuring the core temperature of cooled goods.

PRIOR ART

Supermarkets provide various food items for customers, inter alia fresh foods which are to be maintained in a cooled environment. The cooled environment comprises usually a refrigerator or a room, which can be closable via hinged doors or sliding doors. Hinged doors are usually in a vertical orientation, whereas sliding doors can be oriented vertically, horizontally or inclined. Instead of such a closed compartment, the refrigerator or cooler can also have an opening to the environment for a direct access to food items stored in the refrigerator. Usually cooled products are maintained at temperatures between 2 and 5 degree Celsius for fresh perishable products and below -18 degree Celsius for frozen products.

The temperature mentioned above has to be defined more precisely. The air in the refrigerator has an refrigerated air temperature. This temperature is not necessary identical to the core temperature of the stored food item, since a heat transfer process exchanges the heat of the cold goods to the cooled environment inside a fridge, especially when the said doors are opened and/or a hand of a client enters the refrigerated air and create turbulences with outside air entering. Further heat exchange takes place when the client touches the packaging of the food item, takes it into the hand but perhaps put the food item back at the storage place.

This not only changes the temperature of the air in the refrigerator but also the core temperature of the most inner parts of the cold products.

Hence, an abnormally fluctuation of the core product temperature can occur in both directions, up or down and follows the air temperature. The core product temperature may rise, when the air circulation in the cooler keeps dropping rapidly due to a problem within the cooling process.

The temperature inside such a refrigerator can show large fluctuations & peaks due to defrost cycles, customer interaction and temperature thermostat.

Therefore, regulations exist in various jurisdictions that specimen are taken in regular time intervals from refrigerators and the core product temperature is to be measured directly by inserting a probe thermometer into the food. This process, though labor intensive and wasteful, is the accepted industry norm in Europe in the application year. This means that a temperature sensor is pushed through the packaging into the core of the product and the temperature is measured directly. Such measurement techniques are invasive, cumbersome and expensive, since the tested food item has to be disposed and cannot be sold anymore. Although, the direct measurement of the core temperature of a specimen seems to be a strong indicator relating to the temperature in the refrigerator, such measurements have some risks, that they take not into consideration the layout of the refrigerator as, does it have doors, when clients were approaching the refrigerator, when staff had rearranged or restocked the food items.

Peripheral thermal compartment temperatures can be measured non-invasively and directly without the loss of products but they are not accurate or reliable indicators of the core product temperatures.

WO 2011 / 072 296 A2 A discloses a food safety device for placement on a product. The food safety device comprises one or more sensors that are configured to measure at least one condition of the product and/or its environment, one or more visual indicators that are configured to display a visual indication of freshness and/or safety of the product, an antenna that is configured to transmit and receive data regarding the at least one measured condition of the product and the freshness and/or safety of the product, and a logic module that is configured to execute programmable logic to determine the freshness and/or safety of the product from the at least one measured condition of the product, to cause the one or more visual indicators to display a visual indication of the freshness and/or safety it determines, and to transmit and receive data regarding the at least one measured condition of the product and the freshness and/or safety of the product via the antenna.

WO 2008 1 140 212 A1 relates to a ubiquitous sensor network-based system and method for automatically managing food sanitation. The system includes at least one sensor node configured to measure and store sensing information, compare measured values with preset values, and generate a warning message. A sink node mediates between the sensor node and a management server and between the mobile terminal and the management server. A mobile terminal reads food information using an RFID reader or a barcode reader, transmits the food information, measures and stores sensing information, compares the measured values with preset values, and generates a warning message. The management server generates a control command, transmits the control command to the sensor node or the mobile terminal, and notifies a manager of an urgent situation and a location of the kitchen appliance if the received data is a warning message.

NL 1 036 411 C2 is related to measuring and calculating product temperatures of foodstuffs. These foodstuffs are stored in so-called refrigerated cabinets, chillers and freezers that are suitable for storage and/or presentation. The various food product groups require their own storage and presentation temperature. As it is not possible to install a sensor for each product, several wireless sensors are used in the refrigerated cabinet. The document states that these sensors individually measure the air temperature and a method calculates the correct product temperature with its own interpretation algorithm. This method would include an algorithm depending on the type of refrigerated cabinet and the product to be measured. The data collected by the wireless network is stored and can then be used for optimization of the cooling system. The search report of the NL patent office attached to the document stated that said document contain no examples that enable a skilled person to understand how the method can be carried out.

US 2010 /128755 A1 concerns a device and method for determining the temperature inside an item to be cooked, comprising a temperature sensor for detecting the surface temperature of the item to be cooked and/or an ambient temperature around the item to be cooked, particularly at a measuring location inside the cooking chamber surrounding the item to be cooked, preferably with an ambient temperature sensor which is arranged at said measuring location. Since the method is relating to cooking as e.g. inside a four, the device further comprises a distance sensor for detecting distances between the distance sensor and measuring points on the surface of the item to be cooked as well as a time measuring device for measuring elapsed time during preparation of the item to be cooked. Based on this data a calculation device calculates the temperature inside the item to be cooked using the surface temperature of the item to be cooked and/or the ambient temperature, the distance or multiple distances, elapsed time, and the start temperature of the item to be cooked.

US 6,299,920 B1 provides a non-contact system and method for approximating the internal temperature of food being cooked upon a cooking surface of a cooking apparatus, such as a grill or griddle. Ultrasound or infrared, non-contact measurement devices may be directly installed onto the cooking apparatus, and in concert with a computerized monitoring/control system, are used to monitor the status of the food being cooked, or to control the heat input to the cooking surface using a feedback loop. The system uses an AR PSD based on ultrasound vibrating food particles wherein white noise can be added.

US 2018/003572 A1 discloses a temperature measurement device for monitoring the temperature of a temperature-sensitive product, e.g., a blood product. The temperature measurement device includes at least two types of temperature sensors: (a) a product-interfacing temperature sensor in thermal contact with the product, (b) an on-chip temperature sensor of a microprocessor or microcontroller, and/or (c) an ambient temperature sensor configured to measure an ambient temperature external to the product.

US 2017/224161 A1 provides a cooking device comprising a heating chamber, a heating element for heating a cooking medium in the heating chamber, a temperature sensor for monitoring a temperature of the cooking medium over time, and a mass sensor for monitoring a mass of a food item to be cooked in the heating chamber over time. The cooking device also comprises a controller for processing information from the mass sensor and temperature sensor to provide a prediction of the food item core temperature and to control a cooking process in dependence on the predicted food item core temperature.

SUMMARY OF THE INVENTION

Based on the available prior art, it is an object of the present invention to provide a reliable, non-invasive, accurate, inexpensive food safety system for determining the core product temperature of food items in a cooled environment, especially to fulfill cold chain compliances.

This determination of the core product has to take into account the possibility of events over time as thawing cycles, temperature thermostat, customer interaction, employee interactions and environmental change.

The food safety system according to the invention is characterized by the features of claim 1 and comprises a temperature sensor unit and a control center. The temperature sensor unit is preferably a small portable electronic device which is intended to be positioned in a cooler to be monitored. The control center is a separate control unit which can be provided within the premises with the one or more coolers to be monitored but can also be at a remote place.

The temperature sensor unit has a temperature sensor, a power supply, a data transmission element and a control unit. The temperature sensor unit can be battery based for the power supply. The data transmission element is intended to make a direct or indirect connection with the control center, wherein direct would comprise connections e.g. in the same LAN, while indirect means, e.g. over the internet or other wireless transmission means.

The control center unit has a computer processor and a memory, adapted to execute a deterministic mode function predicting the core temperature change over time, i.e. $\frac{dTc(t)}{dt}$, for a food item on a predefined food item position in said monitored cooler. Within the memory is stored a database with data entries specific for each cooler type intended to be monitored by the food safety system. The deterministic mode function ($f^{cl}$) depends on cooler specific heat transfer parameters ($h^{cl,fp}$) related to the predefined food item position in the cooler used and monitored, food specific coefficients ($Q^{ft}$) related to the kind of food item taken from a group of food types, the environment temperature ($Te^{cl}$) measured by the temperature sensor of the temperature sensor unit and the predicted current core temperature ($Tc^{cl,fp,ft}$) of the food item, i.e. the temperature sensor is an air temperature sensor which provides an information relating to the current core temperature of a plurality of objects within the cooler to be monitored, i.e.:

$$\frac{dTc^{cl,fp,ft}(t)}{dt} = f\left(h^{cl,fp}, Q^{ft}, Te^{cl}, Tc^{cl,fp,ft}\right)$$

In other words, the memory of the control center is filled with a database of heat transfer parameters depending on the cooler type (=cl), on the predefined food item position (=fp) as well as of the food type (=ft) at this food item position, values for the food specific coefficients depending on the food type (=ft), therefore calculating a predicted core temperature for a specific food type specimen at a specific food item position in a predetermined cooler type based on the input value of a measured temperature by the temperature which depends on the cooler type (=cl) through its predetermined position in the cooler.

The function is based on predetermined heat transfer parameters for the cooler which has a plurality of predefined food item positions and a predetermined position for the temperature sensor unit, preferably centrally in the cooler to be monitored.

The memory comprises a database with stored heat transfer parameters for one or more coolers and coolers type. This also includes possible food item positions depending on the layout of the cooler type and is based on said one or more (different) predetermined positions of the temperature sensor unit. The predetermined position of the temperature sensor unit can also be realized by mounting the temperature sensor unit fixedly in the cooler. Only in the latter case, a specific cooler is part of the safety system. When the temperature sensor unit can be positioned in a cooler but is removable, then the safety system comprises at least said temperature sensor unit and a control center, wherein the control center comprises a database with the above mentioned entries for at least one cooler type. It is also possible, that two or more temperature sensors are installed in a cooler, either fixedly or as a mobile unit, again at predetermined positions. This is especially useful for larger units, wherein every sensor monitors a part of the cooler storage space especially either in length or in depth of the cooler storage space. Then every temperature sensor is configured to monitor a part of the cooler space, i.e. independently from the other temperature sensor(s) installed in such a cooler storage space and an alert is initially given for the monitored storage space in which the core temperature prediction rises beyond such given threshold for giving the alarm.

The food specific coefficients are predetermined based on food types with a similar behaviour when stocked in the cooler at a predefined position. The data is predetermined for a predetermined group of different food types, e.g. according to position and food type as a two dimensional array for each cooler or cooler type.

In a preferred embodiment, white noise is added to the deterministic mode function.

The environment temperature ($Te^{cl}$) is measured in predetermined time intervals which can be a regular interval, especially between one and ten minutes, especially two minutes.

The temperature sensor unit in the cooler preferably connect with said control center via a Long Range Wide Power Network (LoRaWan).

In a preferred embodiment, the control center is configured to connect to an alarm server to automatically call a predefined electronic communication device being present at the premises of the cooler transmitting the information of an incident at the cooler in question identified by the related temperature sensor unit. Such an incident is considered to happen when at least one predictive temperature for the different positions in the cooler rise beyond the authorized threshold for the product base on the predicted temperature and triggers the above mentioned transmittal to an alarm server, especially to a user at the premises via e.g. a smartphone or an alarm computer in the unit.

The cooler data in the database in the memory of the safety system can stem from one or more different coolers from the group encompassing one or more types of open cooler, closed cooler having a lid, closed cold storage room, cooler of a refrigerated car or freight wagon, tray or coolbox, i.e. cooler for temperatures of just above 0° Celsius or for temperatures of or less than 18° Celsius. Additionally, a cold storage room can be a room with air doors. In other words, the memory data in the control center is related to at least one type of cooler to be monitored. Therefore, the system can be easily updated, when new coolers are available or simply introduced at an existing location, since it is sufficient to update the database with the specific data for this cooler type, optionally based on one or more of intended positions of the temperature sensor unit.

The food types can be taken from a group including meat, fish, fluid dairy products, solid dairy products, canned food and solid convenience products, i.e. six groups. It is possible to provide for more or different groups, but each group necessitate the prior determination of the above mentioned parameters in the different coolers as used.

The system according to an embodiment of the invention includes a core temperature sensor for non-invasively measuring a temperature of a core thermal compartment of cooled product like meat poultry, fish or dairy products. The core temperature sensor includes an air temperature sensor, having free access to air circulation, and a simulation method that is run by a system connected to the air temperature sensor. The air temperature sensor can be placed in cooler directly beside the cooled goods. The controller is attached to the air temperature sensor wirelessly which is correlated with time to create a temperature-versus-time heat dissipation curve.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1 shows a schematic perspective view of a first vertical cooler type to be monitored with a safety system according to the invention,

Fig. 2 shows a schematic perspective view of a closable second horizontal cooler type to be monitored with a safety system according to the invention,

Fig. 3 shows predicted temperature curves compared to manual temperature checks provided in the framework of validation of the safety system according to the invention;

Fig. 4 shows a schematic view of a temperature sensor unit to be used in connection with the invention;

Fig. 5 shows a schematic view of a food safety system according to the invention together with a plurality of coolers to be monitored .

DESCRIPTION OF PREFERRED EMBODIMENTS

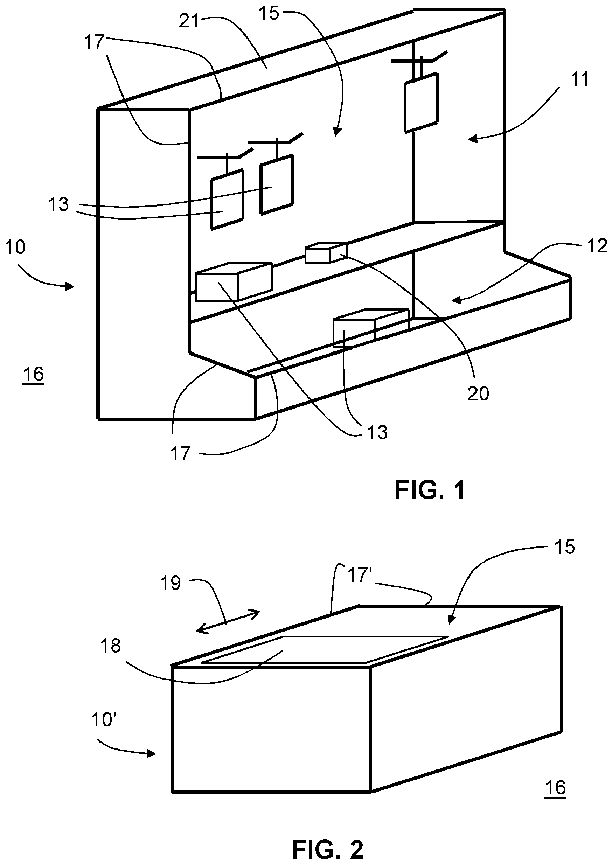

Fig. 1 shows a schematic perspective view of a first vertical cooler type 10 to be monitored with a safety system according to the invention. The first vertical cooler type 10 comprises a mainly vertically oriented open front access surface 11 with a bottom access surface 12 to be reached by a customer from above. The drawing shows as an example specimen of perishable cooled food items 13 as positioned in trays in the bottom part of the cooler 10, on shelves within the open room of the cooler or which are positioned on hangers. The first vertical cooler type 10 has an inner cooled space portion 15 which is virtually separated from the environment of the selling space 16, i.e. the environment by the plane defined by the front edges 17 of the cooler 10. Usually air convection is generated to maintain the cold air within the storage part of the cooler and thus inside of the edges 17 of the cooler According to the invention, one temperature sensor unit 20 is positioned in the cooled space portion 15 at a predetermined position which position will be explained in the following description. It is preferred that this temperature sensor unit 20 has a similar maximum distance to any food item 13 to be positioned in the cooler10, so it is often put in the middle (left to right) of the cooler 10 and preferred in the upper part, e.g. under the top cover plate 21of the cooler unit 10.

In contrast to Fig. 1, Fig. 2 shows a schematic perspective view of a closable second horizontal cooler type 10'. Here the front edges 17 of Fig. 1, defining the plane enclosing the cooler air behind it, are replaced by horizontal abutments and guides 17' around the upper surface of the cooler 10', wherein the separation between the inner cooled space portion 15 from the selling environment 16 is provided by a slidable door 18 which moves essentially horizontally in the direction of the double arrow 19. The products 13 as well as the temperature sensor unit 20 are positioned inside the cooler 10', wherein the temperature sensor unit 20 is preferably positioned in the middle (left to right) at the inside of the back wall of the cooler unit 10'. There may also be two sliding doors 18 covering each 50 % of the edge surface to close the cooler 10' if no food item 13 has to selected; or there might only one door 18 so that one half of the opening between the edges 17 is always open.

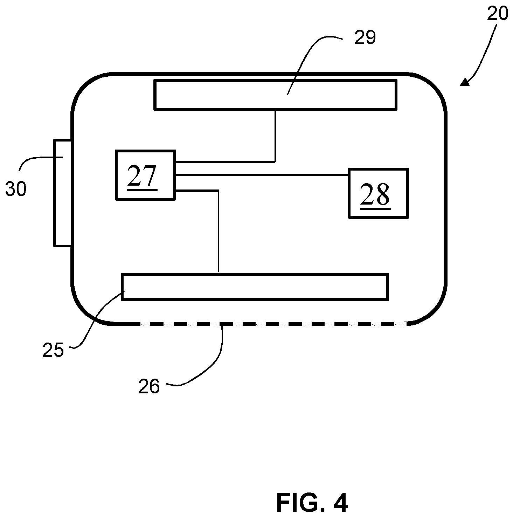

According to the invention one temperature sensor unit 20 is sufficient to be positioned at a predetermined position in any one cooler 10 or 10'. The temperature sensor unit 20 is shown in detail in connection with Fig. 4. The temperature sensor 25 built in the temperature sensor unit 20 allows real-time monitoring of core temperatures of various food products according to the following method of using the food safety system.

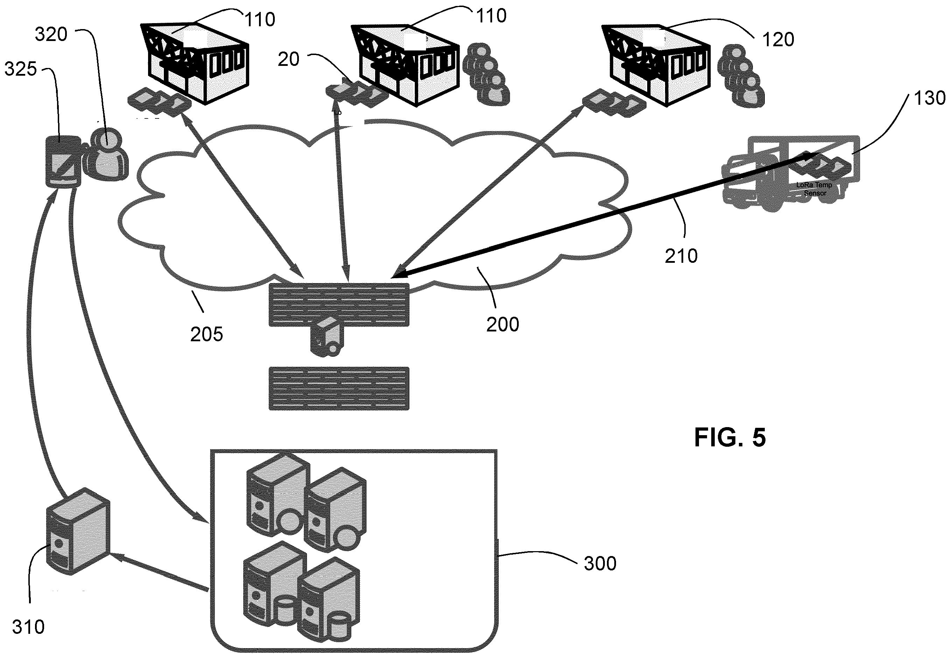

Before the use of the food safety system on site, e.g. in a structure as shown in Fig. 5, within the cooling process the core temperature is mathematically modeled, followed by a data-driven model parameter calibration which allows the model validation through comparison of the model prediction with measured real-world temperature observations through running tests and check measured core temperatures.

The model is simulated bottom up with known material properties and convection influence, in other words, the model is adapted to every different cooler type 10, 10' in use. The model is based on a lumped parameter model, also called lumper element model, which simplifies the description of the behavior of spatially distributed physical systems into a topology consisting of discrete entities that approximate the behavior of the distributed system under certain assumptions which are within the parameter of the product groups and the usual temperature(s) of the environment 16. The temperature field is calculated based on ambient temperature only. The model is calibrated on measurement data. The temperature prediction relies only on ambient temperature, i.e. temperature of air in the cooler.

The model is based on a selection of a few state variables and parameters, especially One set of variables is determined based on the cooler 10, 10'; such variables determine the dependency of the environment temperature at any storage point of the cooler 10, 10', e.g. if the food item to be remotely monitored is near the temperature sensor unit; at the bottom of the fridge or at a hanger in the above left corner. The second set of variables is determined based on the food to be stored; a liquid dairy product has a different temperature changing curve compared to a loose salad under a cellophane cover. All other processes are included in the model as noise.

It is known in the art to use stochastic differential equation (SDE) to model various phenomena such as unstable stock prices or - as it is done here - physical systems subject to thermal fluctuations. A SDE is a differential equation in which one or more of the terms is a stochastic process, resulting in a solution which is also a stochastic process.

Although is is preferred to use SDEs, it is possible to apply simple diffrential equations with higher temperature error estimation.

The model, e.g. based on SDEs, is then checked with calibrated available data as data-driven parameter inference. Based on a time series analysis with prediction the core temperature of product groups at specific places in the cooler is predicte. The forward model is used to make probabilistic predictions which can then allow the model validation and calibration. Model validation as such is not necessary for the function of the safety system at stake, but proves that the predicted core temperature of any food item from the list of predictable food items at any predetermined place in the cooler is in line with a manually measured core temperature which is usually the official check of compliance with regulations and would be applied in case an official of footstock control would appear and make his own check.

This model validation occurs for all types of coolers 10, 10' (and 130) separately, so as do use the specific lumped sum parameter. Beside cooler types 10, 10' the model also depends on different type of food products, which are divided within the model calibration in a predetermined number of food groups, currently taken from the group encompassing meat, fish, fluid dairy products (e.g., milk, yoghurt), solid dairy products (e.g., cheese), canned food and finally solid convenience products (e.g., sandwiches). It is possible to split them into further groups, e.g. if solid dairy products are transported form a logistics center 120 to a retail store 110 with a lorry 130, then "the" product is usually a packaged group of e.g. 4 times 4 times 5 solid dairy product packages, so that the core of this packaged group is different to the display in a retail store.

The stochastic model is based on the addition of a deterministic model function f, depending on heat transfer:

$$\frac{dTc(t)}{dt} = f(h, Q, Te, Tc) + \eta(t)$$

Therein is dTc/dt the rate of core temperature change, f the deterministic model function based on cooler specific heat transfer h, food specific coefficient Q, the environment temperature Te and the core temperature Tc. $\eta$ is the stochastic noise describing unpredictable random events that can perturb the system. It is noted that only Q is related to the food item as part of one of the above mentioned groups and that only h is related to the cooler type (i.e. 10, 10' or 130) beside of course the environment temperature Te to be taken inside the cooler at a predetermined place. But the environment temperature Te is a measured value determined by the temperature sensor unit and not a predetermined value depending on the cooler. The heat transfer is influenced by the environment temperature Te if different the parameters for one cooler are established based on different placements of the temperature sensor unit. The dependencies of the different parameters of function f on the cooler to be monitored (=cl), food position in such a cooler (=fp) and food type provided at this position (=ft) are shown in the general description part of the present specification. Here, the formula is applied based on data relating to one specific cooler and arrangement of food and food types as shown in Fig. 1 or Fig. 2.

The model calibration is performed with the assumption of constant white noise and a normal distribution of core temperatures.

Parameter inference can be carried out using the Markov Chain Monte Carlo (MCMC) method called EMCEE proposed by Goodman and Weare published in Comm. App. Math. And Comp. Sci., 5, 65 (2010).

As mentioned above, the model separates the parameter for the cooler from the parameter of the food groups . As a consequence: The method works with a single temperature sensor in the temperature sensor unit 20 at the center of the cooler. Center of the cooler is usually the point of the cooler having fastest impact on disturbances of the system and having the least greatest distance to food items stored in the cooler. In other words; a sensor positioned in the center of the cooler has equal distance to the left side of the cooler as to the right side and usually, if it is positioned at middle height, also a similar distance to a right high corner as to a lower left corner. Usually a sensor unit 20 can be used to predict the core temperatures in a distance of up to 3 meter, preferably used for a radius of up to 2 meter.

The model then allows to estimate core temperatures Tc at any location within the cooler 10, 10', 130. The food-dependent parameters are associated with specific food groups and will work in any cooler with an controlled environment. Such an environment can also be an outside environment 16, if there is no influence from direct or reflected light from the sun or extensive convection, i.e. without adding heat via additional radiation or convection. Cooler-dependent parameters will fully describe cooler 10, 10' properties and do not depend in any way on the type of food inside the cooler, only from the known disposition of food packages in the cooler.

The quality control of the predictive model is performed by integrating the above mentioned formula of function f(h, Q, Te, Tc). The temperature sensor unit 20 records every 2 minutes the environment temperature Te in the cooler 10 and transfers it to a remote control unit. The predicted values are then compared with actual core temperature measurements performed in the shop premises.

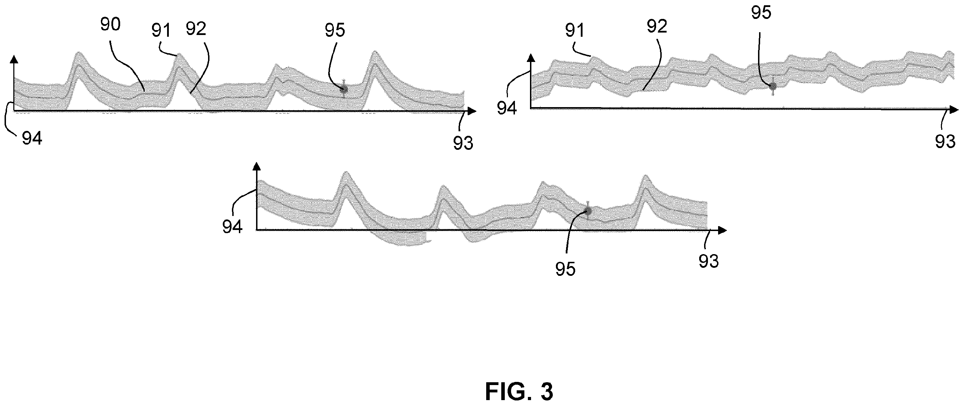

Fig. 3 shows three excerpts of predicted curves of temperature 94 (Te) against time 93 (t) for a perishable food 13 from the food group "diary" in the back row of a specific cooler type 10. Each excerpt shows the predicted temperature 90 at one thousand measurement points in time, i.e. over a time interval of 2000 minutes each = about 33 hours for each curve. The curves 91 reflect the upper uncertainty of the model +1 degree Celsius and the curves 92 the lower uncertainty of the model -1 degree Celsius. Three manual measurements were made, having received the reference numerals 95 with an instrumental error of +- 0,5 degree Celsius which clearly show the correct prediction of the core temperature.

Fig. 4 shows a schematic view of a temperature sensor unit 20 to be used in connection with the invention. The temperature sensor unit 20 comprises a case with openings 26 to allow air from outside to circulate inside over a temperature sensor 25, to determine the air temperature Te. The temperature sensor 25 is connected to a control unit 27 which is connected to a battery or power supply 28 to control taking measurements with the temperature sensor 25 in predefined intervals (here 2 minutes) and to send them vie antenna unit 29 to the remote control center 300, preferably via LoRaWan 200 as shown in Fig. 5 but also other especially wireless transmission means are possible. The temperature sensor unit 20 can be attached to metallic surfaces with the magnet 31.

Fig. 5 shows a schematic view of a food safety system for an integrated company according to the invention. The above mentioned temperature sensor unit 20 is provided at and in every cooler 10 in the retail stores 110 of the company. Beside retail stores 110, such place can also be simple cooler 10 at distribution points of partner companies or at distribution points with clients, when perishable goods are sold at other premises. Furthermore, these temperature sensor units 20 can be used in distribution centers 120; there usually different packaging (groups of perishable food items) are stored in larger cooler units (not shown here). Finally, in order to monitor the entire cold chain the refrigerated lorries 130 can also receive temperature sensor units 20; here inside the vehicle as such. It is possible beside a data transfer via LoRaWan 200 and the internet 205 also to use the GSM / mobile phone infrastructure 210.

All measurement data arrive at the control center 300 and are used to determine the predictive temperatures for the different positions in the cooler 10 or 10'. Preferably, the knowledge, if a temperature of one food category at a specific position in the cooler 10 would raise and perhaps rise beyond the authorized threshold for the product base on the predicted temperature, is transmitted via an alarm server 310 to a user 320 at the premises 110 via e.g. a smartphone or an alarm computer in the unit 110. The user 320, usually an employee of the company can then check the reasons for this finding and take appropriate measures, e.g. replace a faulty cooler, check the isolation of doors 18 etc.. In fact, the safety system comprises the control center 300 and at least one of here a plurality of the temperature sensor units, wherein the control center 300 comprises the database with the parameters for each of the cooler systems to be monitored. If a new cooler has to be added to the group of available coolers to the company, it is sufficient to update the database of the control center with the data relating to this new cooler.

The deterministic model function f based on cooler specific heat transfer h and food specific coefficient Q is developed based on real measurements based on how the different product groups in the core react to temperature change, day and night, in different cooler types. The cooler type parameter also takes into account the position in the cooler. These measurements leading to the model ar eperformed with possible variations of the four product groups: Meat, fish, dairy, convenience foods, such as tranched, shredded, etc., effectively in a real world environment. At least, the cooler and food specificities lead two a two dimensional parameter set. In addition, depending on the cooler type, the topping up effect is taken into account as well as e.g. if several yoghurt cups are on top of each other. The model uses a percentage of filling level of the cooler which is usually observed.

LIST OF REFERENCE SIGNS

| 10 | vertical cooler type | 29 | antenna |

(continued)

| | | | |
|---|---|---|---|
| 10' | second closable horizontal cooler type | 30 | magnet |
| | | 90 | predicted temperature curve |
| 11 | front access surface | 91 | upper uncertainty |
| 12 | bottom access surface | 92 | lower uncertainty |
| 13 | perishable food item | 93 | time |
| 15 | inner cooled space portion | 94 | temperature |
| 16 | environment | 95 | manual measurement point |
| 17 | front edge | 110 | retail store |
| 17' | upper edge guides | 120 | logistics center |
| 18 | slidable door | 130 | distribution lorry |
| 19 | double arrow | 200 | LoRaWan |
| 20 | temperature sensor unit | 205 | internet |
| 21 | top cover plate | 210 | GSM / mobile communication |
| 25 | temperature sensor | 300 | control center |
| 26 | openings | 310 | alarm server |
| 27 | control unit | 320 | user / employee |
| 28 | battery | 325 | smartphone |

**Claims**

1. A food safety system for food items (13) in cooled environments comprising:

   - a cooler (10, 10', 130) comprising a plurality of predefined food item positions
   - a temperature sensor unit (20) comprising a temperature sensor (25), a power supply (28), a data transmission element (29) and a control unit (27), wherein the temperature sensor unit (20) is positioned at a predetermined position in the cooler (10, 10', 130),
   - a control center (300) unit having a computer processor and a memory, wherein the memory data in the control center (300) comprises a database of heat transfer parameters ($h^{cl,fp}$) depending on the type of cooler (10, 10', 130, cl) and on the predefined food item positions (fp) in said type of cooler (10, 10', 130, cl), as well as values for food specific coefficients ($Q^{ft}$) related to the kind of food item taken from a group of food types (ft), wherein the control center is adapted to execute a deterministic mode function predicting the core temperature change of a food item (13) on a predefined food item position in said cooler (10, 10', 130) according to:

$$\frac{dTc^{cl,fp,ft}(t)}{dt} = f\left(h^{cl,fp}, Q^{ft}, Te^{cl}, Tc^{cl,fp,ft}\right)$$

   wherein the deterministic mode function f depends on the stored cooler specific heat transfer parameters ($h^{cl,fp}$) related to the type of cooler and to the predefined food item position in the cooler (10, 10' 130) used, stored food specific coefficients ($Q^{ft}$) related to the kind of food item taken from a group of food types, the environment temperature (Te) measured by the temperature sensor (25) and the predicted current core temperature (Tc) of the food item, wherein the control center (300) is connected to an alarm server and is further configured to, when the control center (300) determines that an incident happens when the predicted core temperature of a food item (13) rises beyond a temperature threshold for this food item (13), to give an alert by automatically calling a predefined electronic communication device (325) transmitting the information of this incident at the monitored cooler (10, 10', 130) in question identified by the temperature sensor unit (20).

2. The food safety system according to claim 1, wherein white noise is added to the deterministic mode function.

3. The food safety system according to claim 1 or 2, wherein the environment temperature (Te) is measured in predetermined time intervals.

**4.** The food safety system according to claim 3, wherein the predetermined time interval is a regular interval.

**5.** The food safety system according to claim 4, wherein the predetermined time interval is between one and ten minutes, especially two minutes.

**6.** The food safety system according to any one of claims 1 to 5, wherein the temperature sensor unit (20) is connected with the control center (300) via a Long Range Wide Power Network (LoRaWan).

**7.** The food safety system according to any one of claims 1 to 6, wherein the predefined electronic communication device (325) is present at the premises of the monitored cooler (10 ,10', 130).

**8.** The food safety system according to any one of claims 1 to 7, wherein the stored memory data in the control center (300) of the heat transfer parameters ($h^{cl,fp}$) is related to at least one type of cooler (10, 10', 130) from the group encompassing one or more types of open cooler, closed cooler having a lid, closed cold storage room, cooler of a refrigerated car, tray or coolbox.

**9.** The food safety system according to any one of claims 1 to 8, wherein the group of food types (ft) comprises meat, fish, fluid dairy products, solid dairy products, canned food and solid convenience products.

**Patentansprüche**

**1.** Lebensmittelsicherheitssystem für Lebensmittel (13) in gekühlter Umgebung, das Folgendes umfasst:

- ein Kühler (10, 10', 130) mit einer Vielzahl von vordefinierten Lebensmittelpositionen,
- eine Temperatursensoreinheit (20) mit einem Temperatursensor (25), einer Stromversorgung (28), einem Datenübertragungselement (29) und einer Steuereinheit (27), wobei die Temperatursensoreinheit (20) an einer vorbestimmten Position im Kühler (10, 10', 130) angeordnet ist,
- eine Steuerzentraleneinheit (300) mit einem Computerprozessor und einem Speicher, wobei die Speicherdaten in der Steuerzentrale (300) eine Datenbank von Wärmeübertragungsparametern ($h^{cl,fp}$) in Abhängigkeit von der Art des Kühlers (10, 10', 130, cl) und auf den vordefinierten Lebensmittelpositionen (fp) in der besagten Art des Kühlers (10, 10', 130, cl) umfassen, sowie Werte für lebensmittelspezifische Koeffizienten ($Q^{ft}$), die sich auf die Art des Lebensmittels beziehen, das aus einer Gruppe von Lebensmitteltypen (ft) entnommen wird, wobei die Steuerzentrale so eingerichtet ist, dass sie eine deterministische Modusfunktion ausführt, die die Kerntemperaturänderung eines Lebensmittels (13) an einer vordefinierten Position des Lebensmittels in dem Kühler (10, 10', 130) gemäss

$$\frac{dTc^{cl,fp,ft}(t)}{dt} = f\left(h^{cl,fp}, Q^{ft}, Te^{cl}, Tc^{cl,fp,ft}\right)$$

Vorhersagt, wobei die deterministische Modusfunktion f von den gespeicherten kühlerspezifischen Wärmeübertragungsparametern ($h^{cl,fp}$), die sich auf den Typ des Kühlers und auf die vordefinierte Position des Lebensmittels in dem verwendeten Kühler (10, 10', 130) beziehen, von gespeicherten lebensmittelspezifischen Koeffizienten ($Q^{ft}$), die sich auf die Art des Lebensmittels aus einer Gruppe von Lebensmitteltypen beziehen, von der durch den Temperatursensor (25) gemessenen Umgebungstemperatur (Te) und von der vorhergesagten aktuellen Kerntemperatur (Tc) des Lebensmittels abhängt, wobei die Steuerzentrale (300) mit einem Alarmserver verbunden und ferner so konfiguriert ist, dass sie, wenn die Steuerzentrale (300) feststellt, dass ein Zwischenfall eintritt, wenn die vorhergesagte Kerntemperatur eines Lebensmittels (13) über einen Temperaturschwellenwert für dieses Lebensmittel (13) hinaus ansteigt, einen Alarm ausgibt, indem es automatisch eine vordefinierte elektronische Kommunikationsvorrichtung (325) anruft, die die Information über diesen Zwischenfall an dem überwachten, von der Temperatursensoreinheit (20) identifizierten Kühler (10, 10', 130) überträgt.

**2.** Lebensmittelsicherheitssystem nach Anspruch 1, wobei der deterministischen Modusfunktion weisses Rauschen hinzugefügt wird.

**3.** Lebensmittelsicherheitssystem nach Anspruch 1 oder 2, wobei die Umgebungstemperatur (Te) in vorgegebenen Zeitintervallen gemessen wird.

4.  Lebensmittelsicherheitssystem nach Anspruch 3, wobei das vorbestimmte Zeitintervall ein regelmässiges Intervall ist.

5.  Lebensmittelsicherheitssystem nach Anspruch 4, wobei das vorbestimmte Zeitintervall zwischen einer und zehn Minuten, insbesondere zwei Minuten, beträgt.

6.  Lebensmittelsicherheitssystem nach einem der Ansprüche 1 bis 5, wobei die Temperatursensoreinheit (20) über ein Long Range Wide Power Network (LoRaWan) mit der Steuerzentrale (300) verbunden ist.

7.  Lebensmittelsicherheitssystem nach einem der Ansprüche 1 bis 6, wobei das vordefinierte elektronische Kommunikationsgerät (325) in den Räumlichkeiten des überwachten Kühlers (10, 10', 130) vorhanden ist.

8.  Lebensmittelsicherheitssystem nach einem der Ansprüche 1 bis 7, wobei die in der Steuerzentrale (300) gespeicherten Daten der Wärmeübertragungsparameter ($h^{cl,fp}$) sich auf mindestens einen Typ eines Kühlers (10, 10', 130) aus der Gruppe beziehen, die einen oder mehrere Typen offener Kühler, geschlossener Kühler mit Deckel, geschlossenen Kühlraum, Kühler eines Kühlwagens, Kühltablett oder Kühlbox umfasst.

9.  Lebensmittelsicherheitssystem nach einem der Ansprüche 1 bis 8, wobei die Gruppe der Lebensmitteltypen (ft) Fleisch, Fisch, flüssige Milchprodukte, feste Milchprodukte, Lebensmittelkonserven und feste Fertigprodukte umfasst.

## Revendications

1.  Système de sécurité alimentaire pour produits alimentaires (13) dans des environnements réfrigérés comprenant :

    - un refroidisseur (10, 10', 130) comprenant une pluralité d'emplacements prédéfinis pour les denrées alimentaires,
    - une unité de capteur de température (20) comprenant un capteur de température (25), une alimentation électrique (28), un élément de transmission de données (29) et une unité de commande (27), dans laquelle l'unité de capteur de température (20) est placée à une position prédéterminée dans le refroidisseur (10, 10', 130),
    - une unité de centre de contrôle (300) doté d'un processeur informatique et d'une mémoire, dans lequel les données de la mémoire du centre de contrôle (300) comprennent une base de données de paramètres de transfert de chaleur ($h^{cl,fp}$) en fonction du type de refroidisseur (10, 10', 130, cl) et sur les positions prédéfinies d'articles alimentaires (fp) dans ledit type de refroidisseur (10, 10', 130, cl), ainsi que des valeurs de coefficients spécifiques aux aliments ($Q^{ft}$) liés au type d'article alimentaire pris dans un groupe de types d'articles alimentaires (ft), dans lequel le centre de contrôle est adapté pour exécuter une fonction de mode déterministe prédisant le changement de température à coeur d'un aliment (13) sur une position prédéfinie de l'aliment dans ledit refroidisseur (10, 10', 130) en fonction de :

    $$\frac{dTc^{cl,fp,ft}(t)}{dt} = f\left(h^{cl,fp}, Q^{ft}, Te^{cl}, Tc^{cl,fp,ft}\right)$$

    dans lequel la fonction de mode déterministe f dépend des paramètres de transfert de chaleur spécifiques au refroidisseur stockés ($h^{cl,fp}$) liés au type de refroidisseur et à la position prédéfinie de l'aliment dans le refroidisseur (10, 10', 130) utilisé, des coefficients spécifiques à l'aliment stockés ($Q^{ft}$) liés au type d'aliment pris dans un groupe de types d'aliments, de la température de l'environnement (Te) mesurée par le capteur de température (25) et de la température à coeur actuelle prédite (Tc) de l'article alimentaire, dans lequel le centre de contrôle (300) est connecté à un serveur d'alarme et est en outre configuré pour, lorsque le centre de contrôle (300) détermine qu'un incident se produit lorsque la température à coeur prédite d'un produit alimentaire (13) dépasse un seuil de température pour ce produit alimentaire (13), donner une alerte en appelant automatiquement un dispositif de communication électronique prédéfini (325) transmettant l'information de cet incident au refroidisseur surveillé (10, 10', 130) en question identifié par l'unité de capteur de température (20).

**2.** Système de sécurité alimentaire selon la revendication 1, dans lequel un bruit blanc est ajouté à la fonction de mode déterministe.

**3.** Système de sécurité alimentaire selon la revendication 1 ou 2, dans lequel la température de l'environnement (Te) est mesurée à des intervalles de temps prédéterminés.

**4.** Système de sécurité alimentaire selon la revendication 3, dans lequel l'intervalle de temps prédéterminé est un intervalle régulier.

**5.** Système de sécurité alimentaire selon la revendication 4, dans lequel l'intervalle de temps prédéterminé est compris entre une et dix minutes, en particulier deux minutes.

**6.** Système de sécurité alimentaire selon l'une des revendications 1 à 5, dans lequel l'unité de capteur de température (20) est connectée au centre de contrôle (300) par l'intermédiaire d'un réseau étendu à grande portée (LoRaWan).

**7.** Système de sécurité alimentaire selon l'une des revendications 1 à 6, dans lequel le dispositif de communication électronique prédéfini (325) est présent dans les locaux du refroidisseur surveillé (10, 10', 130) .

**8.** Système de sécurité alimentaire selon l'une des revendications 1 à 7, dans lequel les données mémorisées dans le centre de contrôle (300) des paramètres de transfert de chaleur ($h^{cl,fp}$ ) se rapportent à au moins un type de refroidisseur (10, 10', 130) du groupe comprenant un ou plusieurs types de refroidisseur ouvert, refroidisseur fermé ayant un couvercle, chambre froide fermée, refroidisseur d'une voiture réfrigérée, plateau ou glacière.

**9.** Système de sécurité alimentaire selon l'une des revendications 1 à 8, dans lequel le groupe de types d'aliments (ft) comprend la viande, le poisson, les produits laitiers liquides, les produits laitiers solides, les aliments en conserve et les produits prêts à l'emploi solides.

**FIG. 1**

**FIG. 2**

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011072296 A2
- WO 20081140212 A1
- NL 1036411 C2
- US 2010128755 A1
- US 6299920 B1
- US 2018003572 A1
- US 2017224161 A1

**Non-patent literature cited in the description**

- **GOODMAN ; WEARE.** *Comm. App. Math. And Comp. Sci.,* 2010, vol. 5, 65